(19) Europäisches Patentamt
European Patent Office
Office européen des brevets

(11) Veröffentlichungsnummer: **0 535 486 A1**

# (12) EUROPÄISCHE PATENTANMELDUNG

(21) Anmeldenummer: **92116092.5**

(22) Anmeldetag: **21.09.92**

(51) Int. Cl.5: **C08L 71/02**, C08L 25/02, C08K 5/49, C08L 71/12

(30) Priorität: **01.10.91 DE 4132639**

(43) Veröffentlichungstag der Anmeldung: **07.04.93 Patentblatt 93/14**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Zeltner, Doris, Dr.**
**Viehtriftstrasse 94**
**W-6725 Roemerberg(DE)**
Erfinder: **Seelert, Stefan, Dr.**
**Albrecht-Duerer-Ring 23a**
**W-6710 Frankenthal(DE)**
Erfinder: **Weiss, Robert, Dr.**
**Bruesseler Ring 53**
**W-6700 Ludwigshafen(DE)**

## (54) Niedermolekulare flammgeschützte Polyphenylenetherformmassen.

(57) Flammgeschützte thermoplastische Formmassen, enthaltend

A) 5 bis 94 Gew.-% eines Polyphenylenethers mit einem mittleren Molekulargewicht $\overline{M}_w$ von 8.000 bis 30.000

B) 5 bis 94 Gew.-% eines vinylaromatischen Polymeren

C) 1 bis 30 Gew.-% mindestens eines Metall- oder Metalloidsalzes einer Phosphonsäure der Formel I

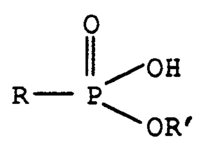

I

wobei

R ein geradkettiger oder verzweigter Alkylrest mit 1 bis 3 C-Atomen, welcher gegebenenfalls durch ein oder mehrere Halogenatome oder Hydroxylgruppen substituiert sein kann und

R' Wasserstoff oder eine Alkylgruppe mit 1 bis 3 C-Atomen

bedeuten und das Metall oder Metalloid ausgewählt ist aus den Gruppen IA, IIA, IIB, IIIA, IVA und VA des Periodensystems.

D) 0 bis 60 Gew.-% üblicher Zusatzstoffe in wirksamen Mengen.

EP 0 535 486 A1

Die Erfindung betrifft flammgeschützte thermoplastische Formmassen, enthaltend

A) 5 bis 94 Gew.-% eines Polyphenylenethers mit einem mittleren Molekulargewicht $\overline{M}_w$ von 8.000 bis 30.000

B) 5 bis 94 Gew.-% eines vinylaromatischen Polymeren

C) 1 bis 30 Gew.-% mindestens eines Metall- oder Metalloidsalzes einer Phosphonsäure der Formel I

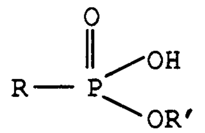

I

wobei

R ein geradkettiger oder verzweigter Alkylrest mit 1 bis 3 C-Atomen, welcher gegebenenfalls durch ein oder mehrere Halogenatome oder Hydroxylgruppen substituiert sein kann und

R' Wasserstoff oder eine Alkylgruppe mit 1 bis 3 C-Atomen

bedeuten und das Metall oder Metalloid ausgewählt ist aus den Gruppen Ia, IIA, IIB, IIIA, IVA und VA des Periodensystems.

D) 0 bis 60 Gew.-% üblicher Zusatzstoffe in wirksamen Mengen.

Weiterhin betrifft die Erfindung die Verwendung derartiger Formmassen zur Herstellung von Fasern, Folien und Formkörpern und die aus den Formmassen erhältlichen Formkörper.

Aus der DE-A 25 46 621 ist die Verwendung von Diarylphosphaten, wie Triphenylphosphat zur Flammschutzausrüstung thermoplastischer Formmassen auf der Basis von Polyphenylenethern (PPE) mit höheren Molekulargewichten und Styrolpolymerisaten bekannt. Der Zusatz von Phosphinoxiden ist aus der US-A 4 278 588 bekannt.

Aus der EP-A 324 716, GB-A 22 11 850, EP-A 245 207 und EP-A 321 002 sind Styrolpolymerisate in Mischung mit PPE ($\overline{M}_w$ ca. 40.000) bekannt, die als Flammschutzmittel ein Metall- oder Metalloidsalz einer Phosphonsäure enthalten.

Das Entformungsverhalten bei z.B. Spritzgußverarbeitung ist verbesserungswürdig.

Metall oder Metalloidsalze zeigen allgemein in Formmassen den Nachteil, daß die Metallkomponente die Kriechstromfestigkeit erhöhen, so daß diese Flammschutzmittel in einigen Anwendungsgebieten nicht eingesetzt werden können.

Aus der DE-A 27 51 329 sind niedermolekulare PPE/Styrolpolymerisate bekannt, die bis zu 50 Gew.-% der allgemein bekannten, jedoch sehr zahlreichen Flammschutzmittel enthalten können.

Der vorliegenden Erfindung lag daher die Aufgabe zugrunde thermoplastische Formmassen auf der Basis von Polyphenylenethern und vinylaromatischen Polymeren zur Verfügung zu stellen, die eine gute Verarbeitbarkeit (gutes Entformungsverhalten) bei gleichzeitig guten Flammschutzeigenschaften in Kombination mit einer besseren Kriechstromfestigkeit aufweisen.

Diese Aufgabe wird durch die eingangs definierten Formmassen gelöst.

Bevorzugte Massen dieser Art und ihre Verwendung sind den Unteransprüchen zu entnehmen.

Die in den erfindungsgemäßen Formmassen enthaltenen Polyphenylenether A) sind an sich bekannt. Die Polyphenylenether A) sind in den erfindungsgemäßen Formmassen in einer Menge von 5 bis 94, bevorzugt 15 bis 80 und insbesondere 30 bis 80 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether),Poly(2,6-diphenyl-1,4-phenylenether), Poly(2,6-dimethoxi-1,4-phenylen-ether), Poly(2,6-diethoxi-1,4-phenylenether), Poly(2-methoxi-6-ethoxi-1,4-phenylenether), Poly(2-ethyl-6-stearyloxi- 1,4-phenylenether), Poly-(2,6-dichlor-1,4-phenylenether), Poly(2-methyl-6-phenyl-1,4-phenylen-ether), Poly(2,6-dibenzyl-1,4-phenylenether), Poly(2-ethoxi-1,4-phenylen-ether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether),Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl- 1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche in den erfindungsgemäßen Formmassen eingesetzt, die ein mittleres Molekulargewicht $\overline{M}_w$ (Gewichtsmittel) von 8000 bis 30000, bevorzugt 12000 bis 25000 und insbesondere 15000 bis 25000 aufweisen.

Dies entspricht einer Grenzviskosität von 0,18 bis 0,45, bevorzugt von 0,25 bis 0,42 und insbesondere von 0,3 bis 0,42 dl/g, gemessen in Chloroform bei 25 °C.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel bei Raumtemperatur). Die Lösung der PPE-Proben in THF erfolgt unter Druck bei 110 °C, wobei 0,16 ml einer 0,25 gew.-%igen Lösung injiziert werden.

Die Detektion erfolgt im allgemeinen mit einem UV-Detektor. Die Eichung der säulen wurde mit PPE-Proben durchgeführt, deren absolute Molekulargewichtsverteilungen durch eine GPC-Laser-Lichtstreuungskombination bestimmt wurde.

Die Komponente B) ist in den erfindungsgemäßen Formmassen in Mengen von 5 bis 94, bevorzugt 10 bis 80 und insbesondere 10 bis 60 Gew.-% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, $\alpha$-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts Mw von 100 bis 300 000 aufweisen, die nach üblichen Methoden bestimmt werden können.

Als Comonomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 - 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes (Mw) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der

Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20 °C besitzen.

Es können auch Mischungen von schlagfest modifizierten und nichtschlagfest modifizierten vinylaromatischen Polymeren eingesetzt werden, wobei das Mischungsverhältnis beliebig ist.

Als Komponente C) enthalten die erfindungsgemäßen Formmassen 1 bis 30, bevorzugt 5 bis 20 und insbesondere 10 bis 15 Gew.-% mindestens eines Metall- oder Metalloidsalzes einer Phosphonsäure der Formel I

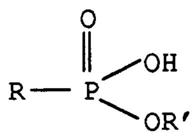

I

wobei

- R ein geradkettiger oder verzweigter Alkylrest mit 1 bis 3 C-Atomen, welcher gegebenenfalls durch ein oder mehrere Halogenatome oder Hydroxylgruppen substituiert sein kann und
- R' Wasserstoff oder eine Alkylgruppe mit 1 bis 3 C-Atomen

bedeuten und das Metall oder Metalloid ausgewählt ist aus den Gruppen IA, IIA, IIB, IIIA, IVA und VA des Periodensystems (Fisher Scientific Company, 1968).

Als Halogenatome in Alkylgruppen R kommen z.B. Fluor-, Brom- und Chloratome in Betracht. Beispiele von Halogenalkylgruppen R sind Chlormethyl, Brommethyl, Trifluormethyl, Dichlormethyl, Dibrommethyl, 2-Chlorethyl, 1-Chlorpropyl und 1-Brompropyl. Sind Alkylgruppen R durch Hydroxylgruppen substituiert, so handelt es sich bevorzugt um durch eine Hydroxylgruppe substituierte Reste, wie Hydroxymethyl, 2-Hydroxyethyl und 3-Hydroxypropyl.

R stellt vorzugsweise unsubstituiertes Alkyl mit 1 bis 3 C-Atomen und insbesondere Methyl dar. R' ist vorzugsweise Wasserstoff oder Methyl.

Das Metall oder Metalloid kann z.B. Lithium, Magnesium, Calcium, Barium, Zink, Bor, Aluminium, Zinn oder Antimon sein. Bevorzugt ist das Metall Lithium und insbesondere Aluminium. Ganz besonders bevorzugt sind Zusammensetzungen, worin R und R' je Methyl sind und das Metall Aluminium ist.

Die Salze können als einfach ionische Verbindungen aus den Anionen der Phosphonsäure und den Kationen des Metalls oder Metalloids vorliegen.

Stellt R' Wasserstoff dar und weist das Metall oder Metalloid eine Wertigkeit von größer als eines auf, so kann das Salz eine polymere Struktur aufweisen gemäß folgender Formel II

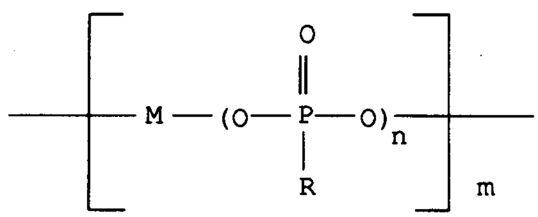

(II),

worin

R die oben angegebene Bedeutung hat, M ein Metall oder Metalloid darstellt, n einen der Wertigkeit von M minus 1 einsprechenden Wert aufweist, m eine Zahl von 2 bis 100 bedeutet und worin jede Gruppe

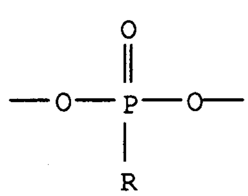

nur an M-Atome gebunden ist.

Als Beispiele von erfindungsgemäß zu verwendenden Phosphonsäuresalzen seien genannt:

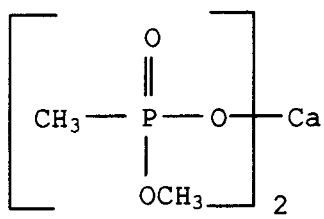
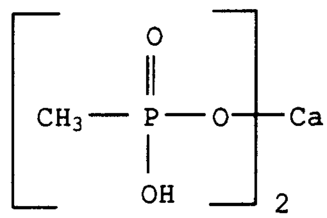
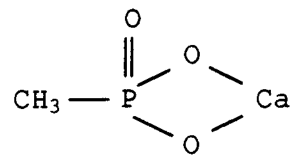

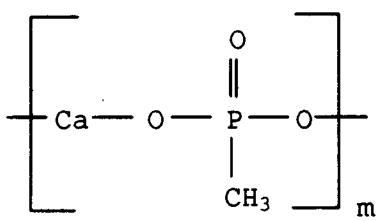
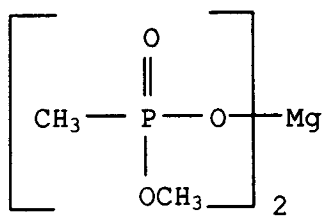
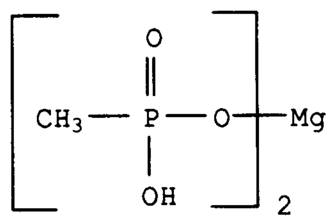

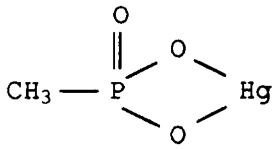
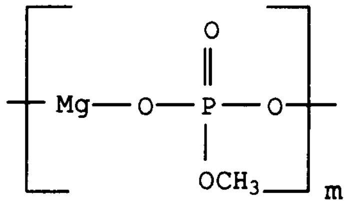
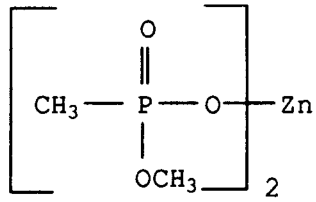

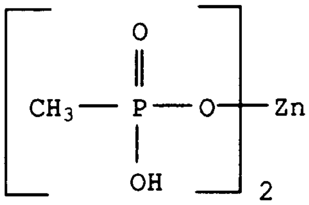
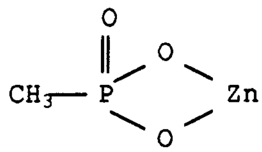
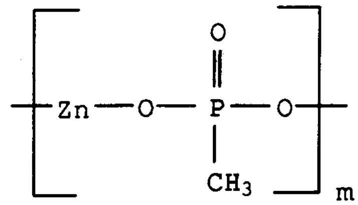

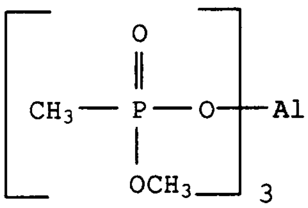
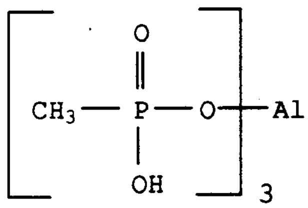
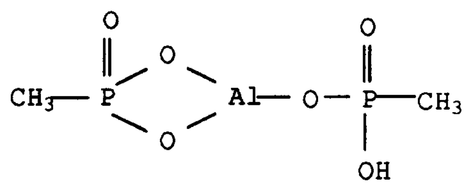

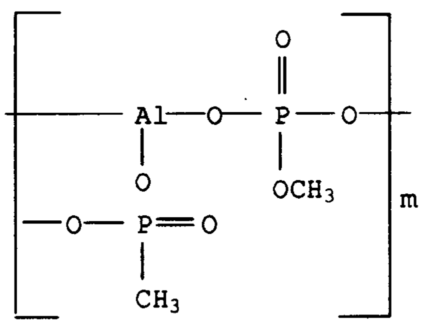
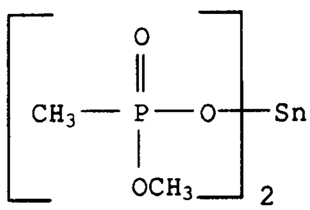
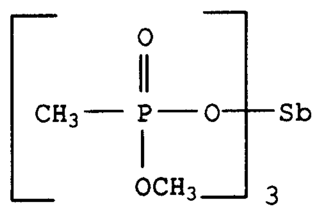

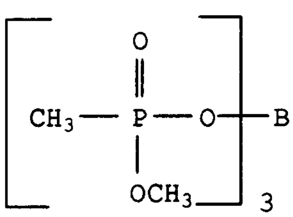
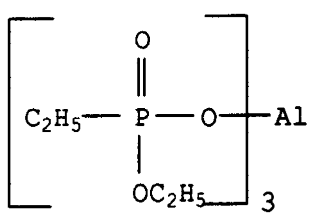
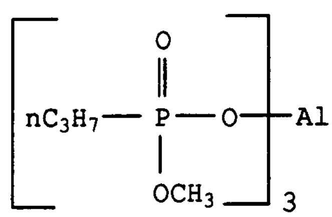

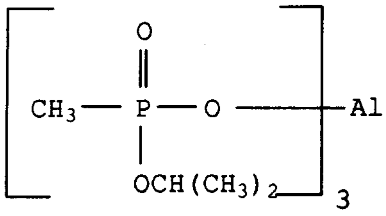 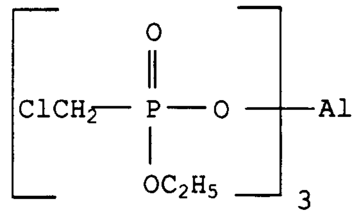 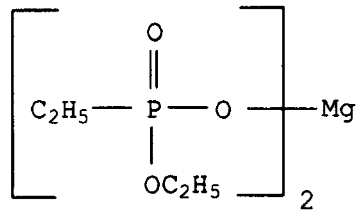

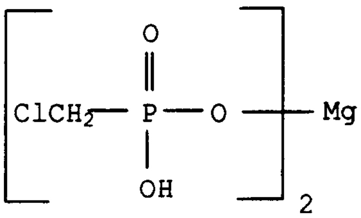 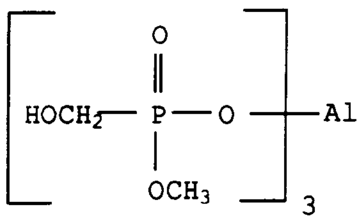 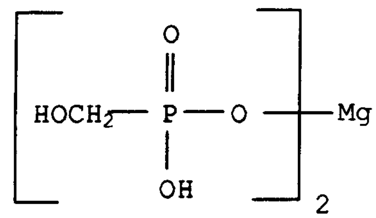

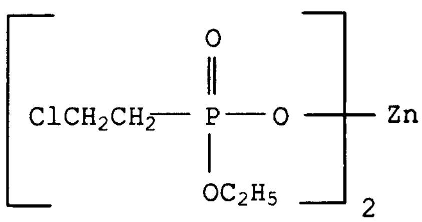 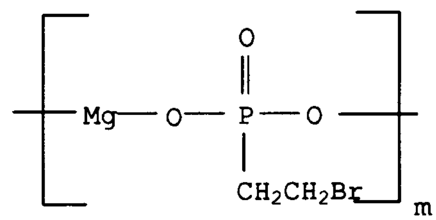 .

Die definitionsgemäßen Phosphonsäuresalze sind entweder bekannt oder können nach an sich bekannten Methoden hergestellt werden, z.B. in Anlehnung an die in der EP-A 245 207 und EP-A 321 002 beschriebenen Verfahren.

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien Schlagzähmodifier genannt, die in Mengen bis zu 20 Gew.-%, bevorzugt bis zu 15 Gew.-% enthalten sein können und welche verschieden von Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M1M2-, M1M2M1M2-, M1M2M1- oder M1M2M1'- wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Zusätzlich können weitere flammhemmende Zusätze wie Triarylphosphinoxide oder Triarylphosphate in den erfindungsgemäßen Formmassen enthalten sein.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z.B. Aloxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von 102 bis 104 $m^2/g$ (BET/ASTM D 3037) bei DBP-Absorptionen von 102 bis 103 ml/100 g (ASTM d 2414).

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320 °C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper mit guten Flammschutzeigenschaften herstellen, die insbesondere eine reduzierte Kriechwegbildung und eine bessere Entformungskraft bei der Verarbeitung aufweisen.

Infolge dieses Eigenschaftsspektrums eignen sich die aus den erfindungsgemäßen Formmassen herstellbaren Formkörper besonders für die Herstellung von Folien und Halbzeug im Spritzgußverfahren.

Beispiele

Es wurden folgende Komponenten eingesetzt:

Komponente A)

A(1): Poly-2,6-dimethyl-1,4-phenylenether mit einem mittleren Molekulargewicht ($\overline{M}_w$) von 16000.
A(2): Poly-2,6-dimethyl-1,4-phenylenether mit einem mittleren Molekulargewicht ($\overline{M}_w$) von 24000.
A(3): Poly-2,6-dimethyl-1,4-phenylenether mit einem mittleren Molekulargewicht ($\overline{M}_w$) von 40000 (zum Vergleich).

Komponente B)

Schlagfestes Polystyrol® KR 2797 der BASF AG mit 13 Gew.-% Polybutadien, mittlere Teilchengröße ($d_{50}$-Wert) 2-3 µm.

Komponente C)

C(1): Aluminiummethylmethylphosphonat
C(2): Lithiummethylmethylphosphonat
C(3): Triphenylphosphinoxid (zum Vergleich)
C(4): Magnesiummethylmethylphosphonat
C(5): Antimonmethylmethylphosphonat

Herstellung der Formmassen

Die Komponenten A) bis C) wurden auf einem Zweischneckenextruder bei 280 °C konfektioniert, durch ein Wasserbad geleitet und granuliert. Das getrocknete Granulat wurde auf einer Spritzgußmaschine bei 280 °C zu Normprüfkörpern verarbeitet.

Die Kriechstromfestigkeit der Formmassen wurde anhand des "Comparativ Tracking Index" CTI-Wertes (Kriechwegbildung) nach DIN IEC 112 gemessen.

Die Entformbarkeit wurde mittels einer Entformungskraftmessung ermittelt. An zylinderförmigen Spritzlingen (Entformungshülsen) der Abmessung 86 * 60 mm und einer Wanddicke von 2 mm wurde bei einer

Spritzgußmaschine mit rollengelagertem Auswerferantrieb die Reibung zwischen Probekörper und Kern in der Anfangsphase des Entformungsvorgangs erfaßt.

Die Flammschutzprüfung erfolgte im vertikalen Brandschutztest an 3.2 mm-Teststäbchen nach den Vorschriften der Underwriter Laboratories zwecks Einordnung in eine Brandklasse UL 94 VE-O, UL 94 VE-1 oder UL 94 VE-2.

Die Zusammensetzung der Formmassen und die Ergebnisse der Messungen sind der Tabelle zu entnehmen.

Tabelle

| | Komponente A [Gew.-%] | Komponente B [Gew.-%] | Komponente C [Gew.-%] | Entformungskraft [N] | CTI | UL-94 (3,2mm-Stab) |
|---|---|---|---|---|---|---|
| 1 | A(1) 55 | B(1) 35 | C(1) 10 | 350 | 375 | VE2 |
| 2 | A(2) 55 | B(1) 35 | C(1) 10 | 410 | 425 | VE1 |
| 3* | A(3) 55 | B(1) 35 | C(1) 10 | 630 | 225 | VE1 |
| 4 | A(2) 70 | B(1) 20 | C(2) 20 | 680 | 275 | VE1 |
| 5* | A(2) 70 | B(1) 20 | C(3) 10 | 710 | 225 | VE1 |
| 6 | A(2) 40 | B(1) 45 | C(1) 15 | 475 | 502 | VE1 |
| 7* | A(2) 40 | B(1) 45 | C(3) 15 | 523 | 436 | VE2 |
| 8 | A(1) 60 | B(1) 25 | C(2) 15 | 360 | 520 | VE1 |
| 9 | A(2) 60 | B(1) 25 | C(2) 15 | 422 | 498 | VE1 |
| 10* | A(3) 60 | B(1) 25 | C(2) 15 | 531 | 455 | VE1 |
| 11 | A(1) 40 | B(1) 40 | C(4) 20 | 293 | 428 | VEO |
| 12* | A(3) 40 | B(1) 40 | C(4) 20 | 350 | 368 | VEO |
| 13 | A(2) 50 | B(1) 45 | C(5) 5 | 479 | 540 | VE2 |
| 14* | A(3) 50 | B(1) 45 | C(5) 5 | 522 | 475 | VE2 |

Beispiel 10* zum Vergleich gemäß EP-A 321 002

## Patentansprüche

**1.** Flammgeschützte thermoplastische Formmassen, enthaltend

A) 5 bis 94 Gew.-% eines Polyphenylenethers mit einem mittleren Molekulargewicht $\overline{M}_w$ von 8.000 bis 30.000

B) 5 bis 94 Gew.-% eines vinylaromatischen Polymeren

C) 1 bis 30 Gew.-% mindestens eines Metall- oder Metalloidsalzes einer Phosphonsäure der Formel I

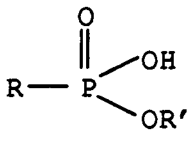

I

wobei

R ein geradkettiger oder verzweigter Alkylrest mit 1 bis 3 C-Atomen, welcher gegebenenfalls durch ein oder mehrere Halogenatome oder Hydroxylgruppen substituiert sein kann und

R' Wasserstoff oder eine Alkylgruppe mit 1 bis 3 C-Atomen

bedeuten und das Metall oder Metalloid ausgewählt ist aus den Gruppen IIA, IIB, IIIA, IVA und VA des Periodensystems.

D) 0 bis 60 Gew.-% üblicher Zusatzstoffe in wirksamen Mengen.

2. Flammgeschützte thermoplastische Formmassen nach Anspruch 1, enthaltend
   A) 15 bis 80 Gew.-%
   B) 10 bis 80 Gew.-%
   C) 5 bis 20 Gew.-%.

3. Flammgeschützte thermoplastische Formmassen nach den Ansprüchen 1 oder 2, in denen die Komponente A) aus einem Polyphenylenether mit einem mittleren Molekulargewicht von 12.000 bis 25.000 aufgebaut ist.

4. Flammgeschützte thermoplastische Formmassen nach den Ansprüchen 1 bis 3, worin R ein unsubstituierter Alkylrest mit 1 bis 3 C-Atomen bedeutet.

5. Flammgeschützte thermoplastische Formmassen nach den Ansprüchen 1 bis 4, in denen das Metall oder Metalloid der Komponente C) aus Magnesium, Calcium, Barium, Zink, Bor, Aluminium, Zinn oder Antimon besteht.

6. Verwendung der flammgeschützten thermoplastischen Formmassen gemüß den Ansprüchen 1 bis 5 zur Herstellung von Fasern, Folien und Formkörpern.

7. Formkörper erhältlich aus den flammgeschützten thermoplastischen Formmassen gemäß den Ansprüchen 1 bis 5.

Europäisches Patentamt

# EUROPÄISCHER RECHERCHENBERICHT

Nummer der Anmeldung

EP 92 11 6092

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X,D | EP-A-0 321 002 (GENERAL ELECTRIC CO.)<br>* Seite 4; Tabelle 1 *<br>* Seite 5; Beispiele B,D *<br>* Seite 3, Zeile 20 - Zeile 22 *<br>--- | 1-5,7 | C08L71/02<br>C08L25/02<br>C08K5/49<br>C08L71/12 |
| Y | EP-A-0 446 169 (CIBA-GEIGY)<br>* Ansprüche 1,5; Tabelle 1 *<br>--- | 1-5,7 | |
| P,Y | DE-U-9 110 420 (BASF)<br>* Ansprüche 1-3 *<br>--- | 1-5,7 | |
| A | EP-A-0 343 109 (CIBA-GEIGY)<br>* Seite 4; Tabelle 1 *<br>* Ansprüche 1,19.20 *<br>----- | 1-7 | |

RECHERCHIERTE SACHGEBIETE (Int. Cl.5 )

C08K
C08L

Der vorliegende Recherchenbericht wurde für alle Patentansprüche erstellt

| Recherchenort | Abschlußdatum der Recherche | Prüfer |
|---|---|---|
| DEN HAAG | 25 JANUAR 1993 | O'SULLIVAN T.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)